# EUROPÄISCHE PATENTSCHRIFT

(11) **EP 2 507 103 B1**
(45) Veröffentlichungstag und Bekanntmachung des Hinweises auf die Patenterteilung: **18.03.2015**
(21) Anmeldenummer: 10781611.8
(22) Anmeldetag: 10.11.2010
(51) Int. Cl.: B60W 20/00, B60W 10/08, B60W 10/26, B60W 30/182, B60L 11/18, B60K 6/48, B60K 1/00

(54) **VERFAHREN UND VORRICHTUNG ZUR STEUERUNG VON HYBRID-FUNKTIONEN IN EINEM KRAFTFAHRZEUG**
METHOD AND DEVICE FOR CONTROLLING HYBRID FUNCTIONS IN A MOTOR VEHICLE
PROCÉDÉ ET DISPOSITIF DE COMMANDE DE FONCTIONS HYBRIDES DANS UN VÉHICULE AUTOMOBILE

(30) Priorität: 05.12.2009 DE 102009057174
(43) Veröffentlichungstag der Anmeldung: 10.10.2012
(73) Patentinhaber: Volkswagen Aktiengesellschaft, 38440 Wolfsburg (DE)
(72) Erfinder: THIAMTONG, Vasoontara, 38442 Wolfgsburg (DE); KRAFZIG, Benjamin, 38165 Lehre (DE); MÜLLER, Thomas, 34121 Kassel (DE)
(86) Internationale Anmeldenummer: PCT/EP2010/006848
(87) Internationale Veröffentlichungsnummer: WO 2011/066899

(56) Entgegenhaltungen:
- EP-A2- 0 985 570
- WO-A1-2008/034661
- WO-A1-2008/133247
- DE-A1-102007 020 935
- US-A1- 2003 118 891
- US-A1- 2009 125 173
- US-B1- 6 215 198

## Beschreibung

Die Erfindung betrifft ein Verfahren nach dem Oberbegriff des Anspruchs 1 und eine Vorrichtung nach dem Oberbegriff des Anspruchs 10 zur Steuerung von Hybrid-Funktionen in einem Kraftfahrzeug.

Hybrid-Fahrzeuge zeichnen sich durch die Kombination von einer Brennkraftmaschine und einer Elektromaschine als Antriebsmittel aus. Dabei werden üblicherweise zwei Typen unterschieden, nämlich Parallelhybrid- und Serienhybrid-Fahrzeuge. Bei Serienhybrid-Fahrzeugen sind Elektromaschine und Brennkraftmaschine fest verbunden, wohingegen bei Parallelhybrid-Fahrzeugen die beiden Antriebseinheiten parallel und auch jeweils alleine zum Antrieb ausgewählt werden können. Darüber hinaus ist es bekannt, die Elektromaschine zum Starten der Brennkraftmaschine zu verwenden, um unter anderem auch eine Start-Stopp-Funktion zu realisieren.

Aus der DE 103 02 860 A1 ist ein Verfahren und eine Vorrichtung zum Ermitteln einer Strategie für das Betreiben einer Batterie bekannt, umfassend mindestens eine Messeinrichtung, mindestens eine Auswerteeinrichtung sowie eine Steuereinrichtung, wobei mittels der Messeinrichtung Spannung und Strom sowie mindestens eine weitere Zustandsgröße der Batterie erfassbar sind, wobei durch die Auswerteeinrichtung basierend auf der mindestens einen weiteren erfassten Zustandsgröße sowie auf Festgrößen der Batterie und/oder daraus abgeleiteten Größen ein dynamisches Betriebsfenster erzeugbar ist, welches einen Arbeitsbereich der Batterie definiert, innerhalb dem die Batterie betrieben werden kann, ohne kritische Werte von Zustandsgrößen der Batterie zu über- oder unterschreiten, wobei basierend auf der erfassten Spannung und des erfassten Stromes der Batterie ein aktueller Arbeitspunkt der Batterie ermittelbar ist, wobei anhand des dynamischen Betriebsfensters in Abhängigkeit vom Arbeitspunkt der Batterie innerhalb des Betriebsfensters mindestens ein Grenzwert mindestens einer Zustandsgröße der Batterie ermittelbar ist, wobei der übermittelte Grenzwert in den Ansteuervorgang der an der Batterie betriebenen Aggregate einbeziehbar ist. Vorzugsweise ist mindestens die Temperatur als weitere Zustandsgröße der Batterie mittels der Messeinrichtung erfassbar.

Aus der DE 102 94 242 T1 ist eine Antriebseinheit für ein Fahrzeug bekannt, die einen Generatormotor verwendet, der durch einen von einem Sammler zugeführten elektrischen Strom aktiviert wird, um ein Fahrzeug anzutreiben, und eine in einem Fahrzeug antreibende Brennkraftmaschine unterstützt, umfassend einen Temperaturdetektor, der eine Temperatur des Sammlers erfasst, einen Stromwertdetektor, der den in den Sammler eingegebenen und aus diesem ausgegebenen Stromwert erfasst, einen Rechner, der einen zulässigen Stromwert, der in den Sammler eingegeben und aus diesem ausgegeben werden kann, auf der Basis einer Differenz zwischen einer Temperatur des Sammlers und einer vorbestimmten oberen Grenztemperatur berechnet, wenn die Temperatur des Sammlers eine Schwellentemperatur überschreitet, einen Stromwertbestimmer, der bestimmt, ob der Stromwert, der in den Sammler eingegeben und aus diesem ausgegeben wird, den zulässigen Stromwert überschreitet, und einen Befehlswert-Korrektor, der einen Drehmomentbefehlswert des Generatormotors verringert, wenn der Stromwertbestimmer bestimmt, dass der Stromwert, der in den Sammler eingegeben und aus diesem ausgegeben wird, den zulässigen Stromwert überschreitet.

Aus der DE 10 2007 020 935 A1 ist ein gattungsgemäßes Verfahren und eine Vorrichtung für die Antriebssteuerung von Hybridfahrzeugen bei hoher Belastung eines elektrischen Energiespeichers bekannt. Dabei offenbart die Druckschrift, dass zur Vermeidung einer unzulässig starken Alterung der Energiedurchsatz in bekannten Hybridsystemen bei höheren Temperaturen eingeschränkt wird, um den Temperaturanstieg zu verlangsamen. Dies ist parallel mit einer Einschränkung von Hybridfunktionen verbunden. Bei Erreichen einer oberen, kritischen Grenztemperatur muss der Energiedurchsatz schließlich nahezu vollständig reduziert werden, wodurch im Wesentlichen nur noch eine Sicherstellung der Fahrzeuggrundfunktionen (wie z.B. er Erststart) erfolgt. Weiter wird offenbart, dass eine erforderliche Reduzierung des Energiedurchsatzes beispielsweise bei Überschreitung einer Batterietemperatur durch Einschränkung von Hybridfunktionen neben der Begrenzung der zulässigen Dauer der Funktionen auch durch die Reduzierung der maximalen Leistung erfolgen. Dabei können entweder alle Funktionen pauschal eingeschränkt werden oder - gegebenenfalls gestuft - zunächst nur eine oder wenige Funktionen.

Aus der US 2003/0118891 A1 ist ein elektrischer Energiespeicher für ein Elektro- oder Hybridfahrzeug bekannt, wo dem elektrischen Energiespeicher eine Kühleinrichtung zugeordnet ist.

Aus der EP 0 985 570 A2 ist ein Verfahren bekannt, bei dem unterhalb einer unteren Grenzwerttemperatur die Batterie durch periodisches Laden und Entladen erwärmt wird.

Der Erfindung liegt das technische Problem zugrunde, ein Verfahren und eine Vorrichtung zur Steuerung von Hybrid-Funktionen zu schaffen, mittels derer bei hoher Batterielebensdauer ein guter Gesamtenergieverbrauch eines Kraftfahrzeuges erreichbar ist.

Die Lösung des technischen Problems ergibt sich durch die Gegenstände mit den Merkmalen der Ansprüche 1 und 10. Weitere vorteilhafte Ausgestaltungen der Erfindung ergeben sich aus den Unteransprüchen.

Das Verfahren zur Steuerung von Hybrid-Funktionen in einem Kraftfahrzeug mittels mindestens eines Steuergerätes, mindestens einer Elektromaschine und mindestens einer Batterie schaltet mittels des Steuergerätes mindestens eine Hybrid-Funktion oberhalb einer vorgegebenen Batterietemperatur ab. Dem liegt die Erkenntnis zugrunde, dass die Lebensdauer einer Batterie abhängig von der Batterietemperatur ist. Durch die Abschaltung mindestens einer Hybrid-Funktion wird dabei die Belastung der Batterie begrenzt und somit einem weiteren Temperaturanstieg entgegengewirkt. Vorzugsweise wird dabei allen Hybrid- Funktionen oder zumindest mehreren Hybrid-Funktionen eine Batterietemperatur zugeordnet, bei der die jeweilige Hybrid-Funktion abgeschaltet wird. Dabei kann jeder Hybrid-Funktion eine eigene unterschiedliche Batterietemperatur zugeordnet sein oder aber einigen oder allen Hybrid-Funktionen die gleiche Batterietemperatur als Abschaltbedingung zugeordnet werden. Unter Hybrid-Funktionen werden dabei insbesondere eine Start-Stopp-Funktion, elektrisches Fahren, Boost-Betrieb (elektrische Antriebsunterstützung durch die Elektromaschine zusätzlich zu der Brennkraftmaschine) und Rekuperieren verstanden. Die Batterietemperatur kann dabei sowohl sensorisch erfasst werden oder aber beispielsweise mittels Modellbildung aus Außentemperatur und Belastung ermittelt werden.

Dabei wird die Batterietemperatur, bei der die Hybrid-Funktion eingeschränkt oder abgeschaltet wird, abhängig von einem Gradienten der Batterietemperatur gewählt. Der Gradient ist die zeitliche Änderung der Temperatur in der Batterie, d.h. eine häufige Belastung der Batterie in kurzen Zeitabständen heizt die Batterie mit einem hohen Temperaturgradienten auf. Der Temperaturgradient ist daher ein Indiz dafür, wie schnell eine bestimmte Batterietemperatur erreicht wird. Daher wird die Temperatur, bei der die Abschaltung einer Hybrid-Funktion erfolgt, bei höheren Gradienten erniedrigt, d.h. es wird früher die Belastung der Batterie reduziert, um den weiteren Anstieg der Batterietemperatur entgegenzuwirken. Der Temperaturgradient kann dabei gemessen und/oder über den Energieeintrag in die Batterie vorherbestimmt werden. Vorzugsweise erfolgt die Vorherbestimmung anhand des Energieeintrages in die Batterie basierend auf dem Batteriestrom (genauergenommen dem Quadrat des Stromes multipliziert mit dem Batterie-Innenwiderstand). Die Vorherbestimmung bzw. Prädiktion des Temperaturgradienten bietet die Möglichkeit, eine Temperaturänderung der Batterie bereits vorherzusagen, bevor sich aufgrund der hohen thermischen Trägheit der Batterie eine Änderung auf dem Temperatursignal einstellt.

In einer bevorzugten Ausführungsform wird mindestens eine Hybrid-Funktion kontinuierlich oder stufenweise über einen Temperaturbereich beschränkt, bevor die Hybrid-Funktion abgeschaltet wird. Dadurch kann die Hybrid-Funktion länger zur Verfügung gestellt bleiben, wobei nur der Leistungsumfang reduziert wird. Dabei wird der Hybrid-Funktion eine erste Batterietemperatur zugeordnet, ab der die Funktion beschränkt wird, und eine zweite Batterietemperatur zugeordnet, ab der die Hybrid-Funktion abgeschaltet wird. Dabei kann vorgesehen sein, die Beschränkung und/oder Abschaltung akustisch und/oder optisch anzuzeigen.

In einer weiteren Ausführungsform wird auch die Batterietemperatur, bei der die Hybrid-Funktion eingeschränkt wird, abhängig von einem zeitlichen Gradienten der Batterietemperatur gewählt.

In einer weiteren bevorzugten Ausführungsform werden die Hybrid-Funktionen sukzessive in einer vorgegebenen Reihenfolge beschränkt und/oder abgeschaltet. Somit können insbesondere die energiesparenden Hybrid-Funktionen wie Rekuperieren oder elektrisch Fahren möglichst lange erhalten bleiben, um somit den Gesamtenergieverbrauch weiter zu verbessern.

In einer weiteren bevorzugten Ausführungsform ist die Batterietemperatur mindestens einer Hybrid-Funktion, bei der die Hybrid-Funktion eingeschränkt und/oder abgeschaltet wird, von einem gewählten Fahrmodus abhängig. So kann beispielsweise bei der Wahlmöglichkeit zwischen einem sportlichen Modus und einem energiesparenden Modus bei dem sportlichen Modus der Boost-Betrieb auch noch bei höheren Batterietemperaturen angeboten werden, wobei dann vorzugsweise andere Hybrid-Funktionen eher beschränkt werden. Daher kann auch die Reihenfolge der Beschränkung und/oder Abschaltung der Hybrid-Funktionen abhängig vom Fahrmodus geändert werden.

In einer weiteren bevorzugten Ausführungsform wird oberhalb einer oberen Grenzwerttemperatur die Batterie mittels einer Kühleinrichtung gekühlt, wobei vorzugsweise die Batterietemperatur für das Einsetzen der Kühlung unter der Batterietemperatur liegt, bei der die Hybrid-Funktionen eingeschränkt und/oder abgeschaltet werden. Hierdurch wird der Temperaturanstieg der Batterie begrenzt, so dass die Hybrid-Funktionen länger zur Verfügung stehen.

In einer weiteren bevorzugten Ausführungsform wird unterhalb einer unteren Grenzwerttemperatur die Batterie durch periodisches Laden und Entladen erwärmt. Dem liegt die Erkenntnis zugrunde, dass bei niedrigen Temperaturen die Leistungsfähigkeit der Batterie eingeschränkt ist, so dass starke Belastungen die Lebensdauer der Batterie verkürzen. Vorzugsweise werden daher unterhalb der vorgegebenen Temperatur alle oder einige Hybrid-Funktionen abgeschaltet.

Vorzugsweise liegt die Frequenz des Lade-Entlade-Zyklus zwischen 0,1 bis 100 Hz, weiter vorzugsweise zwischen 1 bis 50 Hz. Vorzugsweise nimmt dabei die Frequenz des Lade-Entlade-Zyklus mit steigender Batterietemperatur ab, da mit zunehmender Erwärmung der Batterie diese stärker belastet werden kann.

Die Vorrichtung zur Steuerung von Hybrid-Funktionen in einem Kraftfahrzeug umfasst mindestens ein Steuergerät, wobei mittels des Steuergeräts Hybrid-Funktionen eines Kraftfahrzeuges gesteuert werden, wobei das Steuergerät mindestens eine Hybrid-Funktion oberhalb einer vorgegebenen Batterietemperatür abschaltet. Hinsichtlich der weiteren Vorteile und Ausgestaltungen kann vollinhaltlich auf die Ausführungen zu dem Verfahren Bezug genommen werden.

Die Erfindung wird nachfolgend anhand eines bevorzugten Ausführungsbeispieles näher erläutert. Die Fig. zeigen:
- Fig. 1: ein schematisches Blockschaltbild eines Hybrid-Systems in einem Kraftfahrzeug und
- Fig. 2: eine Darstellung eines Kennfeldes der Hybrid-Funktionen über der Temperatur und den Temperaturgradienten.

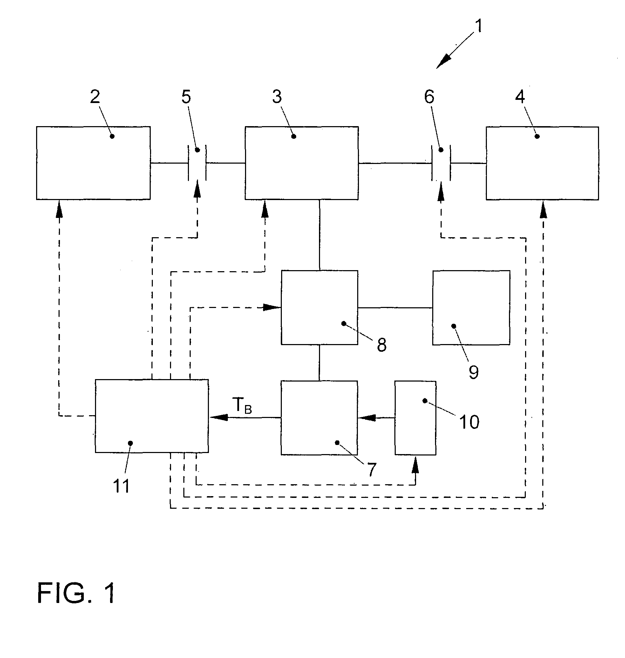

In der Fig. 1 sind die wesentlichen Elemente eines Hybrid-Systems 1 eines Kraftfahrzeuges dargestellt. Das Hybrid-System 1 umfasst eine Brennkraftmaschine 2, eine Elektromaschine 3 und ein Getriebe 4. Zwischen der Brennkraftmaschine 2 und der Elektromaschine 3 ist eine erste Kupplung 5 angeordnet. Zwischen der Elektromaschine 3 und dem Getriebe 4 ist eine zweite Kupplung 6 angeordnet. Weiter umfasst das Hybrid-System 1 mindestens eine Batterie 7, die über eine Leistungselektronik 8 mit der Elektromaschine 3 verbunden ist. Des Weiteren ist die Elektromaschine 3 über die Leistungselektronik 8 mit einem Bordnetz 9 des Kraftfahrzeuges verbunden. Das Bordnetz 9 kann dabei auch über eine Bordnetzbatterie verfügen. Weiter ist der Batterie 7 eine Kühleinrichtung 10 zugeordnet. Des Weiteren umfasst das Hybrid-System 1 mindestens ein Steuergerät 11, das die Brennkraftmaschine 2, die Elektromaschine 3, das Getriebe 4, die Kupplungen 5, 6 und die Leistungselektronik 8 steuert. Dabei sei angemerkt, dass die Funktion des Steuergeräts 11 auch auf verschiedene Steuergeräte aufgeteilt werden kann.

Zunächst sollen kurz die wesentlichen Hybrid-Funktionen erläutert werden.

Beim elektrischen Fahren ist die Kupplung 6 geschlossen und die Kupplung 5 offen. Die Elektromaschine 3 wird motorisch betrieben und über die Batterie 7 mit elektrischer Energie versorgt.

Beim Boosten ist zusätzlich die Kupplung 5 geschlossen, wobei Brennkraftmaschine 2 und Elektromaschine 3 jeweils motorisch arbeiten.

Bei der Start-Stopp-Funktion wird die Brennkraftmaschine 2 ausgeschaltet und später durch die motorisch betriebene Elektromaschine 3 wieder gestartet, wozu die Kupplung 5 geschlossen ist bzw. wird.

Beim Rekuperieren wird die Kupplung 6 geschlossen und die Elektromaschine 3 generatorisch betrieben, so dass dann die kinetische Energie in elektrische Energie gewandelt wird und zum Laden der Batterie 7 verwendet wird.

Eine weitere Funktion ist das Laden der Batterie 7 durch die Brennkraftmaschine 2, die motorisch betrieben wird, wohingegen die Elektromaschine 3 generatorisch betrieben wird.

Bei einer Aufwärmfunktion steuert das Steuergerät 11 die Leistungselektronik 8 und die Elektromaschine 3 derart an, dass die Batterie periodisch entladen und geladen wird, bis eine untere Grenzwerttemperatur T_{g} der Batterie 7 von beispielsweise 10°C erreicht wird.

Ab einer oberen Grenzwerttemperatur T_{K} der Batterie 7 von beispielsweise 32°C wird die Kühleinrichtung 10 eingeschaltet, um die Batterie zu kühlen.

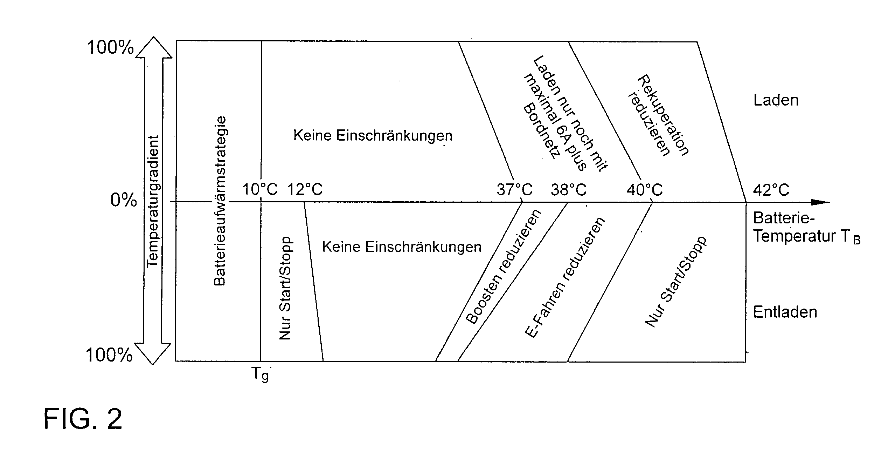

Das Verfahren zur Steuerung der Hybrid-Funktionen in Abhängigkeit von der Batterietemperatur T_{B} wird anhand von Fig. 2 näher erläutert. Dabei ist auf der X-Achse die Batterietemperatur T_{B} und auf der Y-Achse der zeitliche Gradient der Batterietemperatur T_{B} aufgetragen. Oberhalb der X-Achse sind dabei die Funktionsbereiche der Hybrid-Funktionen für das Laden der Batterie 7 und unterhalb die Funktionsbereiche der Hybrid-Funktionen für das Entladen der Batterie 7 eingezeichnet. Zunächst sollen die Hybrid-Funktionen des Ladens bei einem Temperaturgradienten von 0 % erläutert werden. Bis zu der unteren Grenzwerttemperatur T_{g} von 10°C sind alle Hybrid-Funktionen ausgeschaltet und die Batterie wird durch periodisches Laden und Entladen aufgewärmt, wobei mit steigender Batterietemperatur T_{B} die Frequenz des Lade-Entlade-Zyklus abnimmt. Oberhalb der unteren Grenzwerttemperatur T_{g} gibt es zunächst keine Einschränkungen bezüglich des Ladens der Batterie 7 durch die von der Brennkraftmaschine 2 oder Rekuperation generatorisch angetriebene Elektromaschine 3. Ab der nicht eingezeichneten oberen Grenzwerttemperatur T_{K} von beispielsweise 32°C wird dann die Kühleinrichtung 10 eingeschaltet. Erreicht dann die Batterietemperatur T_{B} den Wert 37°C, so wird die Batterie 7 nur noch mit einem reduzierten, vorzugsweise konstanten, Strom von der durch die Brennkraftmaschine 2 generatorisch angetriebenen Elektromaschine 3 geladen. Dabei liefert die Elektromaschine 3 neben dem vorzugsweise konstanten Ladestrom für die Batterie 7 auch noch den Strom für das Bordnetz 9. Der konstante Ladestrom ist dabei besonders günstig für die Lebensdauer der Batterie, wobei die Begrenzung des Ladestroms eine weitere Erwärmung zumindest verlangsamt. Die Hybrid-Funktion Rekuperation bleibt davon unbeeinflusst, so dass weiterhin soviel Rekuperationsenergie wie möglich in der Batterie 7 gespeichert wird. Erreicht die Batterietemperatur T_{B} 40°C, so wird die Ladung der Batterie 7 durch die von der Brennkraftmaschine 2 angetriebene Elektromaschine 3 abgeschaltet und die Batterie 7 wird nur noch durch Rekuperation geladen. Bei Batterietemperaturen T_{B} zwischen 40°C und einer absoluten Grenzwerttemperatur von 42°C wird die Rekuperation beschränkt, um die Belastung der Batterie 7 zu reduzieren. Die Beschränkung kann kontinuierlich oder stufenweise mit der Batterietemperatur zunehmen oder auch ein fester Wert sein. Oberhalb von 42°C (der absoluten Grenzwerttemperatur) gibt es keine Hybrid-Funktion mehr. Lediglich das Bordnetz 9, d.h. die Verbraucher, werden über die Elektromaschine 3 weiterhin mit elektrischer Energie versorgt. Bei höheren Temperaturgradienten erfolgt die Beschränkung bzw. Abschaltung der Hybrid-Funktionen entsprechend bei niedrigen Temperaturen.

Unterhalb der X-Achse sind die Funktionsbereiche für die Hybrid-Funktionen des Entladens dargestellt. Bis zur unteren Grenzwerttemperatur T_{g} sind wieder keine Hybrid-Funktionen aktiv und die Batterie 7 wird durch periodisches Laden und Entladen erwärmt. Ab der unteren Grenzwerttemperatur T_{g} ist noch kein elektrisches Fahren oder Boosten möglich, allerdings kann dann die Start-Stopp-Funktion eingeschaltet werden. Start-Stopp-Funktion bedeutet, dass die Elektromaschine 3 als Starter verwendet wird, aber kein Antriebsmoment aufbringt. Für den Stopp-Fall wird die Brennkraftmaschine ausgeschaltet (z.B. an einer Ampel). Dies kann auch während der Fahrt geschehen, d.h. das Fahrzeug rollt ohne Brennkraftmaschine, die beim Gasgeben sofort wieder gestartet wird. Ab einer Batterietemperatur von 12°C ist das elektrische Fahren als auch Boosten möglich. Ab einer Batterietemperatur von 37°C wird die Hybrid-Funktion Boosten beschränkt. Die Beschränkung wird dabei bis zu einer Batterietemperatur von 38°C kontinuierlich erhöht. Bei 38°C wird dann die Boost-Funktion abgeschaltet. Die Beschränkung kann eine zeitliche und/oder eine leistungsmäßige Reduzierung des Boostens sein. Ab Erreichen einer Batterietemperatur von 38°C wird dann die Hybrid-Funktion elektrisch Fahren kontinuierlich bis zu einer Batterietemperatur von 40°C beschränkt und bei Erreichen dieser Temperatur abgeschaltet. Zwischen 40°C bis 42°C bleibt dann nur noch die Start-Stopp-Funktion aktiv, die dann bei Erreichen der absoluten Grenzwerttemperatur von 42°C auch noch abgeschaltet wird.

Die angegebenen Temperaturen sind beispielhaft für eine Nickelmetallhybrid-Batterie angegeben. Bei Li-Ionen-Batterien verschieben sich entsprechend die Temperaturbereiche.

### Bezugszeichenliste

- 1: Hybrid-System
- 2: Brennkraftmaschine
- 3: Elektromaschine
- 4: Getriebe
- 5: erste Kupplung
- 6: zweite Kupplung
- 7: Batterie
- 8: Leistungselektronik
- 9: Bordnetz
- 10: Kühleinrichtung
- 11: Steuergerät
- T_{g}: untere Grenzwerttemperatur
- T_{K}: obere Grenzwerttemperatur
- T_{B}: Batterietemperatur

## Patentansprüche

1. Verfahren zur Steuerung von Hybrid-Funktionen in einem Kraftfahrzeug mittels mindestens eines Steuergerätes, mindestens einer Elektromaschine und mindestens einer Batterie, wobei mittels des Steuergeräts (11) mindestens eine Hybrid-Funktion oberhalb einer vorgegebenen Batterietemperatur (T_{B}) abgeschaltet wird,
**dadurch gekennzeichnet, dass**
die Batterietemperatur (T_{B}), bei der die Hybrid-Funktion abgeschaltet wird, abhängig von einem zeitlichen Gradienten der Batterietemperatur (T_{B}) gewählt wird.

2. Verfahren nach Anspruch 1, **dadurch gekennzeichnet, dass** mindestens eine Hybrid-Funktion kontinuierlich oder stufenweise über einen Batterietemperaturbereich beschränkt wird, bevor die Hybrid-Funktion abgeschaltet wird.

3. Verfahren nach Anspruch 2, **dadurch gekennzeichnet, dass** die Batterietemperatur (T_{B}), bei der die Hybrid-Funktion eingeschränkt wird, abhängig von einem zeitlichen Gradienten der Batterietemperatur (T_{B}) gewählt wird.

4. Verfahren nach einem der vorangegangenen Ansprüche, **dadurch gekennzeichnet, dass** die Hybrid-Funktionen sukzessive in einer vorgegebenen Reihenfolge beschränkt und/oder abgeschaltet werden.

5. Verfahren nach einem der vorangegangenen Ansprüche, **dadurch gekennzeichnet, dass** die Batterietemperatur (T_{B}) mindestens eine Hybrid-Funktion, bei der die Hybrid-Funktion eingeschränkt und/oder abgeschaltet wird, von einem gewählten Fahrmodus abhängig ist.

6. Verfahren nach einem der vorangegangenen Ansprüche, **dadurch gekennzeichnet, dass** oberhalb einer oberen Grenzwerttemperatur (T_{K}) die Batterie (7) mittels einer Kühleinrichtung (10) gekühlt wird.

7. Verfahren nach einem der vorangegangenen Ansprüche, **dadurch gekennzeichnet, dass** unterhalb einer unteren Grenzwerttemperatur (Tg) die Batterie (7) durch periodisches Laden und Entladen erwärmt wird.

8. Verfahren nach Anspruch 7, **dadurch gekennzeichnet, dass** die Frequenz des Lade-Entlade-Zyklus zwischen 0,1 bis 100 Hz liegt.

9. Verfahren nach Anspruch 7 oder 8, **dadurch gekennzeichnet, dass** die Frequenz des Lade-Entlade-Zyklus mit steigenden Batterietemperaturen (T_{B}) abnimmt.

10. Vorrichtung zur Steuerung von Hybrid-Funktionen in einem Kraftfahrzeug, umfassend mindestens ein Steuergerät, wobei mittels des Steuergerätes Hybrid-Funktionen eines Kraftfahrzeuges gesteuert werden, wobei das Steuergerät (11) mindestens eine Hybrid-Funktion oberhalb einer vorgegebenen Batterietemperatur (T_{B}) abschaltet, **dadurch gekennzeichnet, dass**
die Batterietemperatur (T_{B}), bei der die Hybrid-Funktion abgeschaltet wird, abhängig von einem zeitlichen Gradienten der Batterietemperatur (T_{B}) gewählt wird.

## Claims

1. Method for controlling hybrid functions in a motor vehicle by means of at least one control device, at least one electric machine and at least one battery, wherein at least one hybrid function is switched off above a predefined battery temperature (T_{B}) by means of the control device (11),
**characterized in that**
the battery temperature (T_{B}) at which the hybrid function is switched off is selected as a function of a time gradient of the battery temperature (T_{B}).

2. Method according to Claim 1, **characterized in that** at least one hybrid function is limited continuously or incrementally over a battery temperature range before the hybrid function is switched off.

3. Method according to Claim 2, **characterized in that** the battery temperature (T_{B}) at which the hybrid function is limited is selected as a function of a time gradient of the battery temperature (T_{B}).

4. Method according to one of the preceding claims, **characterized in that** the hybrid functions are limited and/or switched off successively in a predefined sequence.

5. Method according to one of the preceding claims, **characterized in that** the battery temperature (T_{B}) of at least one hybrid function, at which temperature the hybrid function is limited and/or switched off is dependent on a selected driving mode.

6. Method according to one of the preceding claims, **characterized in that** above an upper limiting value temperature (T_{K}) the battery (7) is cooled by means of a cooling device (10).

7. Method according to one of the preceding claims, **characterized in that** below a lower limiting value temperature (T_{G}) the battery (7) is heated by periodic charging and discharging.

8. Method according to Claim 7, **characterized in that** the frequency of the charging/discharging cycle is between 0.1 to 100 Hz.

9. Method according to Claim 7 or 8, **characterized in that** the frequency of the charging/discharging cycle decreases as the battery temperatures (T_{B}) rise.

10. Device for controlling hybrid functions in a motor vehicle, comprising at least one control device, wherein hybrid functions of a motor vehicle are controlled by means of the control device, wherein the control device (11) switches off at least one hybrid function above a predefined battery temperature (T_{B}), **characterized in that**
the battery temperature (T_{B}) at which the hybrid function is switched off is selected as a function of a time gradient of the battery temperature (T_{B}).

## Revendications

1. Procédé de commande de fonctions hybrides dans un véhicule automobile à l'aide d'au moins un appareil de commande, d'au moins un moteur électrique et d'au moins une batterie, au moins une fonction hybride étant déconnectée au-dessus d'une température de batterie (T_{B}) prédéfinie à l'aide de l'appareil de commande (11), **caractérisé en ce que** la température de batterie (T_{B}) à laquelle la fonction hybride est déconnectée est sélectionnée en fonction du gradient dans le temps de la température de batterie (T_{B}).

2. Procédé selon la revendication 1, **caractérisé en ce qu'**au moins une fonction hybride est limitée en continu ou par paliers sur une plage de température de batterie avant que la fonction hybride soit déconnectée.

3. Procédé selon la revendication 2, **caractérisé en ce que** la température de batterie (T_{B}) à laquelle la fonction hybride est limitée est sélectionnée en fonction d'un gradient dans le temps de la température de batterie (T_{B}).

4. Procédé selon l'une quelconque des revendications précédentes, **caractérisé en ce que** les fonctions hybrides sont limitées et/ou déconnectées de façon successive suivant une séquence prédéfinie.

5. Procédé selon l'une quelconque des revendications précédentes, **caractérisé en ce que** la température de batterie (T_{B}) d'au moins une fonction hybride pour laquelle la fonction hybride est limitée et/ou déconnectée dépend d'un mode de conduite sélectionné.

6. Procédé selon l'une quelconque des revendications précédentes, **caractérisé en ce qu'**au-dessus d'une température de valeur limite supérieure (T_{K}), la batterie (7) est refroidie au moyen d'un dispositif de refroidissement (10).

7. Procédé selon l'une quelconque des revendications précédentes, **caractérisé en ce qu'**en dessous d'une température de valeur limite inférieure (Tg), la batterie (7) est réchauffée par une charge et décharge périodique.

8. Procédé selon la revendication 7, **caractérisé en ce que** la fréquence du cycle de charge-décharge est comprise entre 0,1 à 100 Hz.

9. Procédé selon la revendication 7 ou 8, **caractérisé en ce que** la fréquence du cycle de charge-décharge diminue à mesure que les températures de batterie (T_{B}) augmentent.

10. Dispositif de commande de fonctions hybrides dans un véhicule automobile, comprenant au moins un appareil de commande, les fonctions hybrides d'un véhicule automobile étant commandées à l'aide de l'appareil de commande, l'appareil de commande (11) déconnectant au moins une fonction hybride au-dessus d'une température de batterie (T_{B}) prédéfinie, **caractérisé en ce que** la température de batterie (T_{B}) à laquelle la fonction hybride est déconnectée est sélectionnée en fonction d'un gradient dans le temps de la température de batterie (T_{B}).
